# EUROPÄISCHE PATENTSCHRIFT

(11) **EP 3 098 372 B1**
(45) Veröffentlichungstag und Bekanntmachung des Hinweises auf die Patenterteilung: **20.03.2019**
(21) Anmeldenummer: 16171333.4
(22) Anmeldetag: 25.05.2016
(51) Int. Cl.: E05B 79/04, E05B 77/38, F16B 5/12, F16B 21/08

(54) **KOMPONENTE EINES KRAFTFAHRZEUGSCHLIESSSYSTEMS**
COMPONENT OF A MOTOR VEHICLE LOCKING SYSTEM
COMPOSANT D'UN SYSTEME DE FERMETURE DE VEHICULE AUTOMOBILE

(30) Priorität: 26.05.2015 DE 102015108254
(43) Veröffentlichungstag der Anmeldung: 30.11.2016
(73) Patentinhaber: Brose Schliesssysteme GmbH & Co. KG, 42369 Wuppertal (DE)
(72) Erfinder: Bettin, Axel, 45527 Hattingen (DE); Schauerte, Ralf, 42477 Radevormwald (DE); Kamberg, Axel, 50169 Kerpen (DE); Böhler, Michael, 80995 München (DE)
(74) Vertreter: Gottschald, Jan

(56) Entgegenhaltungen:
- EP-A1- 2 354 570
- WO-A1-2009/080641
- DE-U1- 29 920 497
- DE-U1-202005 011 420
- US-A- 5 765 959

## Beschreibung

Die Erfindung betrifft eine Komponente eines Kraftfahrzeugschließsystems mit mindestens einem Befestigungselement zur Befestigung der Komponente an einem Kraftfahrzeug.

Grundsätzlich sind im Stand der Technik verschiedene Komponenten von Kraftfahrzeugschließsystemen bekannt.

Aus der US 5,765,959 ist beispielsweise ein Umlenkhebel eines Kraftfahrzeugschließsystems bekannt, welcher mittels eines Befestigungselements an einer Kraftfahrzeugtür befestigt ist.

In der DE 20 2005 008 151 U1 ist beispielsweise eine Zuziehhilfe beschrieben. Es ist bekannt, Zuziehhilfen über eine Schraubverbindung oder eine Schnappverbindung an einem Fahrzeug festzulegen. Motorische Zuziehhilfen erzeugen im Betrieb Geräusche. Dabei sind zwei Arten von Geräuschen zu unterscheiden. Eine Zuziehhilfe wird nämlich in zwei Lastbereichen betrieben. Dem Lastbereich beim Schließen eines Verschlusselements und dem im Wesentlichen lastlosen Reversieren des Antriebs. Die Frequenzbereiche der erzeugten Geräusche in diesen beiden Bereichen unterscheiden sich. Beim Zuziehen hat das Geräusch ein niedrigeres Frequenzspektrum und beim Reversieren ein höheres. Auch die Vibrationen beim Betätigen des Antriebes werden als Körperschall über die Befestigung auf das Kraftfahrzeug übertragen und können Geräusche verursachen. Diese Geräusche werden von den Benutzern des Fahrzeugs als störend wahrgenommen.

Der Erfindung liegt die Aufgabe zugrunde, die bekannte Komponente von einem Kraftfahrzeugschließsystem so auszugestalten und weiterzubilden, dass diese Geräusche reduziert werden und die Montage vereinfacht wird.

Gelöst wird die obige Aufgabe durch eine Komponente eines Kraftfahrzeugschließsystems gemäß Anspruch 1.

Der Erfindung liegt zunächst die Überlegung zugrunde, dass eine montagefreundliche Schnappverbindung für die Komponente realisierbar ist, ohne auf eine wirksame Dämpfung von Vibrationen verzichten zu müssen. Im Einzelnen wird hierzu vorgeschlagen, dass das mindestens eine, der Komponente zugeordnete Befestigungselement mindestens zwei Befestigungsabschnitte aufweist, von denen zumindest ein Befestigungsabschnitt ein als Schnappelement ausgestaltetes Eingriffselement aufweist. Das Schnappelement kann für eine gute Schnappverbindung ohne weiteres aus einem steifen Material ausgebildet sein, da vorschlagsgemäß ein zweiter, dämpfender Befestigungsabschnitt vorgesehen ist, der aus einem weicheren Material besteht als der erste Befestigungsabschnitt.

Der erste Befestigungsabschnitt und der zweite Befestigungsabschnitt bilden eine Einheit aus, die als solche insbesondere für eine einfache Herstellung der Schnappverbindung im Wesentlichen formstabil ist. Die Formstabilität des Befestigungselements stellt sicher, dass sowohl das Befestigungselement als auch die Komponente einfach montiert werden können und kein unnötiges Ausrichten des Befestigungselements notwendig ist. Zwar kann sich das Befestigungselement, insbesondere das weichere Material, unter Belastung elastisch verformen, es nimmt seine ursprüngliche Form jedoch nach dem Wegfall der Belastung im Wesentlichen wieder an.

Im Ergebnis wird mit der vorschlagsgemäßen Lösung eine einfache Montage der Komponente und gleichzeitig eine Dämpfung der Schwingungen und damit der Geräusche beim Betrieb der Komponente gewährleistet.

Gemäß einer bevorzugten Ausgestaltung der Erfindung können mehrere Befestigungselemente zur Befestigung der Komponente dienen. Vorzugsweise sind einige Befestigungselemente gleich ausgebildet, insbesondere alle Befestigungselemente gleich ausgebildet.

Gemäß einer weiter bevorzugten Ausgestaltung der Erfindung kann das Befestigungselement für die Befestigung der Komponente Zugkräfte und/oder Druckkräfte übertragen. Vorzugsweise erstrecken sich die Befestigungsabschnitte auf einer geometrischen Befestigungselementachse, entlang welcher der Kraftfluss der Druckkräfte und/oder Zugkräfte verläuft. Weiter vorzugsweise erstreckt sich das Befestigungselement entlang der Befestigungselementachse länglich (Anspruch 2).

Gemäß einer weiter bevorzugten Ausbildung der Erfindung weist das Befestigungselement, insbesondere der zweite Befestigungsabschnitt, eine Eingriffskontur für die Befestigung an der Komponente im Übrigen auf. Vorzugsweise ist diese der Komponente zugewandte Eingriffskontur, vorzugsweise der zweite Befestigungsabschnitt des Befestigungselements, als Stopfen, insbesondere als Durchzugstopfen ausgebildet. Hierdurch wird eine einfache Montage der Befestigungselemente an der Komponente gewährleistet (Anspruch 4).

Insbesondere kann das Befestigungselement eine schwingungsdämpfende vorzugsweise Körperschall dämpfende Wirkung aufweisen. Der erste Befestigungsabschnitt, ggf. zusammen mit dem Gegeneingriffselement am Kraftfahrzeug, und/oder der zweite Befestigungsabschnitt können eine schwingungsdämpfende, insbesondere Körperschall dämpfende Wirkung aufweisen. Weiter vorzugsweise weisen der erste Befestigungsabschnitt ggf. zusammen mit dem Gegeneingriffselement am Kraftfahrzeug, und der zweite Befestigungsabschnitt unterschiedliche Dämpfungsverhalten auf. Die unterschiedlichen Dämpfungsverhalten ermöglichen das Dämpfen bzw. Absorbieren unterschiedlicher Frequenzbereiche. Auf diese Weise können zunächst die von der Komponente ausgehenden Schwingungen vom zweiten Befestigungsabschnitt gedämpft werden, und für jene Schwingungen, welche nicht durch das zweite Befestigungselement ausreichend gedämpft wurden, durch den ersten Befestigungsabschnitt und ggf. zusammen mit dem Gegeneingriffselement weiter gedämpft werden (Anspruch 5).

Für den zweiten Befestigungsabschnitt findet vorzugsweise ein Elastomer Anwendung, wobei das Material des zweiten Befestigungsabschnitts vorzugsweise eine Shore-A Härte zwischen 35 und 80, vorzugsweise zwischen 45 und 70, weiter vorzugsweise zwischen 50 und 60 aufweist. Weiter vorzugsweise handelt es sich bei dem Material des zweiten Befestigungsabschnitts um ein EPDM-Material oder ein NBR-Material. Diese weisen besonders gute schwingungsdämpfende Eigenschaften auf (Anspruch 10).

Zusätzlich oder alternativ kann der erste Befestigungsabschnitt unmittelbar mit dem zweiten Befestigungsabschnitt an einer Verbindungsstelle verbunden sein und insbesondere der für die Befestigung erforderliche Kraftfluss zwischen dem ersten Befestigungsabschnitt und dem zweiten Befestigungsabschnitt über die Verbindungsstelle laufen. Vorteilhaft ist es zudem, wenn der erste Befestigungsabschnitt formschlüssig mit dem zweiten Befestigungsabschnitt verbunden ist und weiter vorzugsweise der erste Befestigungsabschnitt mit dem zweiten Befestigungsabschnitt durch eine gegenseitige insbesondere kegelförmige Hinterschneidung verbunden ist. Durch eine solche Hinterschneidung ergibt sich eine gute mechanische Robustheit.

Nach einer weiteren Lehre wird die eingangs genannte Aufgabe bei einem Kraftfahrzeugschließsystem gemäß den Merkmalen von Anspruch 14 gelöst. Wesentlich ist, dass das Kraftfahrzeugschließsystem eine Komponente gemäß der erstgenannten Lehre aufweist. Auf alle Ausführungen zu der Komponente gemäß der erstgenannten Lehre darf verwiesen werden.

Bei der besonders bevorzugten Ausgestaltung gemäß Anspruch 15 weist das Trägerelement mindestens ein Gegeneingriffselement für den befestigenden Eingriff mit dem Eingriffselement des ersten Befestigungsabschnitts auf. Dabei hat der erste Befestigungsabschnitt zusammen mit dem Gegeneingriffselement des Trägerelements eine schwingungsdämpfende, insbesondere Körperschall dämpfende Wirkung. Hierdurch kann der von dem zweiten Befestigungsabschnitt nicht gedämpfte Anteil einer Schwingung durch den ersten Befestigungsabschnitt zusammen mit dem Gegeneingriffselement weiter gedämpft werden.

Schließlich wird die eingangs genannte Aufgabe verfahrensmäßig durch ein Verfahren mit den Merkmalen von Anspruch 16 gelöst. Es ergeben sich dieselben Vorteile wie zuvor im Zusammenhang mit der Komponente und dem Kraftfahrzeugschließsystem beschrieben.

Im Folgenden wird die Erfindung anhand einer lediglich Ausführungsbeispiele darstellenden Zeichnung näher erläutert. In der Zeichnung zeigt
- Fig. 1: eine Kraftfahrzeugschließsystemkomponente in einer dreidimensionalen Ansicht,
- Fig. 2: das Befestigungselement gemäß dem Schnitt II-II aus Fig. 1.

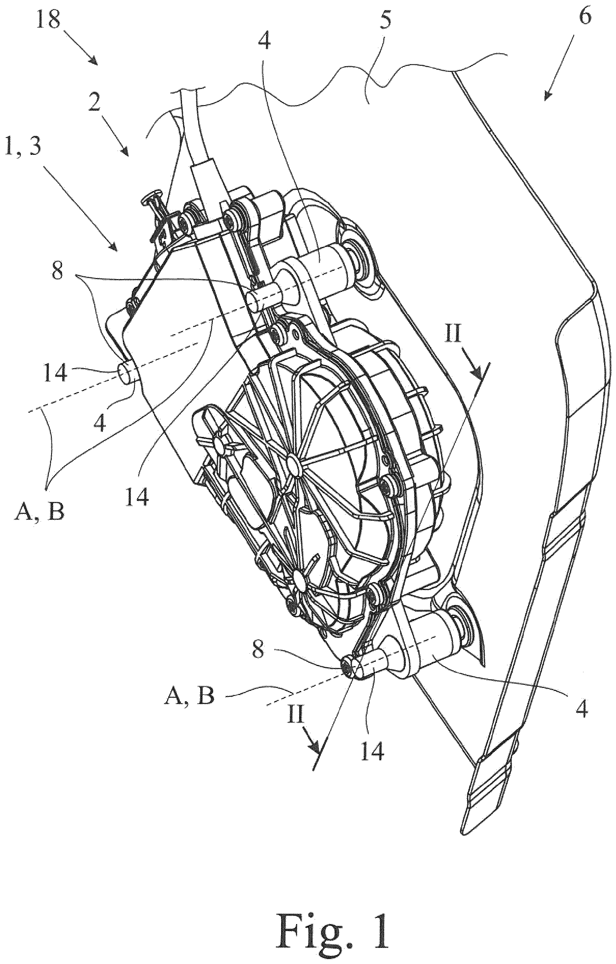

Die in Fig. 1 gezeigte Komponente 1 eines Kraftfahrzeugschließsystems 2 ist vorliegend eine Zuziehhilfe 3. Es handelt sich bei der Komponente 1 nicht zwangsläufig um eine Zuziehhilfe 3. Die Komponente 1 kann auch eine andere Komponente eines Kraftfahrzeugschließsystems 2 sein, bspw. ein Öffnungshilfsantrieb. Die Komponente 1 ist vorzugsweise mit mindestens einem, im Ausführungsbeispiel der Fig. 1 mit drei Befestigungselementen 4, an dem Trägerelement 5 des Kraftfahrzeugs 6 befestigt.

Die Befestigungselemente 4 sind bevorzugt gleich ausgebildet. Besonders bewährt hat sich eine Befestigung der Komponente mit drei, vier oder fünf Befestigungselementen 4.

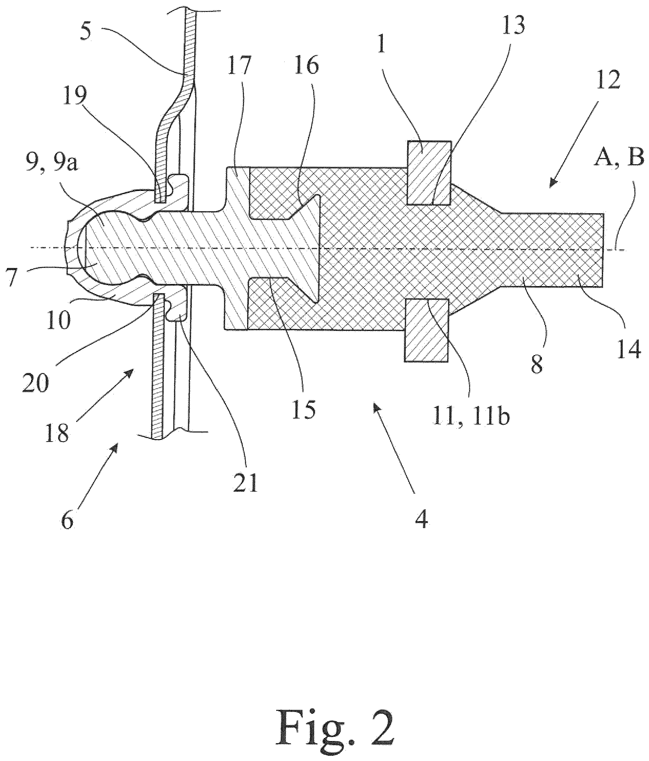

Wie anhand Schnittdarstellung der Fig. 2 besonders gut zu sehen ist, weist das Befestigungselement 4 des Ausführungsbeispiels einen ersten Befestigungsabschnitt 7 und einen zweiten Befestigungsabschnitt 8 auf. Der erste Befestigungsabschnitt 7 bildet ein als Schnappelement 9a ausgestaltetes Eingriffselement 9 für den befestigenden Eingriff mit einem Gegeneingriffselement 10 am Kraftfahrzeug 6 aus. Der zweite Befestigungsabschnitt 8 besteht aus einem weicheren Material als der erste Befestigungsabschnitt 7. Der erste Befestigungsabschnitt 7 und der zweite Befestigungsabschnitt 8 bilden eine Einheit, die als solche im Wesentlichen formstabil ist.

Das Befestigungselement ist bevorzugt insofern formstabil, als dass es elastisch verformbar ist, sich nach dem Wegfall der Verformung jedoch in seine Ausgangslage zurückstellt.

Das Eingriffselement 9 kann als männliches Eingriffselement, insbesondere als Kugelkopf, oder als weibliches Eingriffselement, insbesondere als Kugelkopfaufnahme, ausgebildet sein.

Das Befestigungselement 4 überträgt für die Befestigung der Komponente 1 Zugkräfte und/oder Druckkräfte. Hier und vorzugsweise erstrecken sich die Befestigungsabschnitte 7, 8 auf einer geometrischen Befestigungselementachse A. Weiter bevorzugt ist das Befestigungselement 4 wie im Ausführungsbeispiel gezeigt ein rotationssymmetrischer Körper mit einer Rotationsachse B. Die Befestigungselementachse A und die Rotationsachse B sind bevorzugt koaxial angeordnet. Weiter vorzugsweise erstreckt sich der Kraftfluss der Druck- und/oder Zugkräfte entlang der Befestigungselementachse A. Darüber hinaus kann sich wie hier das Befestigungselement 4 entlang der Befestigungselementachse A länglich erstrecken.

Hier und vorzugsweise nimmt das Befestigungselement 4 Querkräfte auf. Tatsächlich werden vorzugsweise bei der Betätigung der Komponente 1 hauptsächlich Querkräfte in die Befestigungselemente 4 eingeleitet. Diese werden dann insbesondere hauptsächlich auf Scherung beansprucht.

Zusätzlich oder alternativ weist das Befestigungselement 4, insbesondere der zweite Befestigungsabschnitt 8, eine Eingriffskontur 11 für die Befestigung an der Komponente 1 im Übrigen auf. Hier und vorzugsweise ist diese der Komponente 1 zugewandte Eingriffskontur 11, vorzugsweise der zweite Befestigungsabschnitt 8 des Befestigungselements 4, als Stopfen, insbesondere als Durchziehstopfen 12, ausgebildet. Die Eingriffskontur 11 weist im Ausführungsbeispiel eine Nut 13 und ein Angriffselement 14 auf. Das Angriffselement 14 ist hier und vorzugsweise zum Einführen in eine Öffnung der zu befestigenden Komponente 1 ausgebildet und zum anschließenden rückseitigen Ziehen der als Nut 13 ausgebildeten Eingriffskontur 11 in eine die Befestigung herstellende Rastlage.

Vorzugsweise weist die Komponente 1, insbesondere ein Gehäuseabschnitt der Komponente 1, eine Öffnung zur Befestigung des Befestigungselements 4, insbesondere des zweiten Befestigungsabschnitts 8 an der Komponente auf. Die Öffnung ist bevorzugt ein rundes oder halbmondförmiges Loch.

Gemäß einem weiteren, nicht gezeigten Ausführungsbeispiel, kann der zweite Befestigungsabschnitt 8 ein mittlerer Befestigungsabschnitt sein. Das Befestigungselement 4 kann einen nicht gezeigten dritten Befestigungsabschnitt aufweisen. Dieser wäre bevorzugt dem ersten Befestigungsabschnitt 7 gegenüberliegend am zweiten Befestigungsabschnitt 8 angeschlossen. Bevorzugt weisen der zweite Befestigungsabschnitt 8 und/oder der dritte Befestigungsabschnitt eine Eingriffskontur 11, insbesondere eine Rastnut 13 und/oder ein Gewinde auf.

Hier und vorzugsweise weist das Befestigungselement 4 eine schwingungsdämpfende, insbesondere Körperschall dämpfende Wirkung auf. Vorzugsweise weisen der erste Befestigungsabschnitt 7, ggf. zusammen mit dem Gegeneingriffselement 10 am Kraftfahrzeug 6, und/oder der zweite Befestigungsabschnitt 8 eine schwingungsdämpfende, insbesondere Körperschall dämpfende Wirkung auf. Weiter vorzugsweise weisen der erste Befestigungsabschnitt 7 ggf. zusammen mit dem Gegeneingriffselement 10 am Kraftfahrzeug 6 und der zweite Befestigungsabschnitt 8 unterschiedliche Dämpfungsverhalten auf. Hierdurch ist es möglich, wie dies auch im Ausführungsbeispiel der Fall ist, Schwingungen der Komponente 1 zunächst durch den zweiten Befestigungsabschnitt 8 zu dämpfen, und solche Schwingungen, insbesondere höher frequente Schwingungen, welche nicht vom zweiten Befestigungsabschnitt 8 gedämpft oder nicht so stark gedämpft werden, vom ersten Befestigungsabschnitt 7, ggf. zusammen mit dem Gegeneingriffselement 10 am Kraftfahrzeug 6, zu dämpfen. Hierdurch kann die Dämpfungsleistung weiter gesteigert werden. Der erste Befestigungsabschnitt 7 zusammen mit dem Gegeneingriffselement 10 und des zweite Befestigungselement 8 weisen unterschiedliche Übertragungsfunktionen auf.

Vorzugsweise weist das Material des ersten Befestigungsabschnitts 7 eine Shore-Härte D zwischen 40 und 100, insbesondere zwischen 60 und 95 auf. Hierdurch ergibt sich eine besonders gute und feste Bindung mit dem Gegeneingriffselement 10 am Kraftfahrzeug 6.

Des Weiteren hat sich als Material dem ersten Befestigungsabschnitt 7 Kunststoffmaterial erwiesen. Vorzugsweise ist das Material des ersten Befestigungsabschnitts ein Polyamid, insbesondere PA612, oder ein PBT-Material (Polybutylenterephthalat).

Vorzugsweise ist das Material des ersten Befestigungselements 7 ein faserverstärkter Kunststoff. Im Ausführungsbeispiel und vorzugsweise ist der Kunststoff glasfaserverstärkt. Ein Faseranteil von mindestens 15 Gew.-%, weiter bevorzugt mindestens 20 Gew.-% und noch weiter bevorzugt mindestens 30 Gew.-% hat sich als vorteilhaft erwiesen. Besonders bevorzugt ist der Kunststoff des ersten Befestigungselements 7 zu mindestens 35 Gew.-% oder zu mindestens 40 Gew- % faserverstärkt. Hierdurch wird die Festigkeit und die Temperaturbeständigkeit des ersten Befestigungsabschnitts gesteigert.

Das Material des zweiten Befestigungsabschnitts 8 ist hier und vorzugsweise ein elastisches Material insbesondere ein Gummi oder ein EPDM-Material (Ethylen-Propylen-Dien-Kautschuk) oder ein NBR-Material (Nitril-Butadien-Kautschuk).

Darüber hinaus kann für den zweiten Befestigungsabschnitt 8 auch ein Kunststoffmaterial verwendet werden.

Hier und vorzugsweise ist der erste Befestigungsabschnitt 7 unmittelbar mit dem zweiten Befestigungsabschnitt 8 an einer Verbindungsstelle 15 verbunden. Hier läuft vorzugsweise der für die Befestigung erforderliche Kraftfluss zwischen dem ersten Befestigungsabschnitt 7 und dem zweiten Befestigungsabschnitt 8 über die Verbindungsstelle 15. Besonders vorteilhaft ist es, wenn wie hier der erste Befestigungsabschnitt 7 formschlüssig mit dem zweiten Befestigungsabschnitt 8 verbunden ist. Für den Formschluss als besonders vorteilhaft hat es sich herausgestellt, dass der erste Befestigungsabschnitt 7 mit dem zweiten Befestigungsabschnitt 8 durch eine gegenseitige, insbesondere kegelförmige, Hinterschneidung 16 verbunden ist.

Durch eine vorzugsweise so ausgestaltete Verbindungsstelle 10 können Zug-Druck- als auch Scherkräfte sicher übertragen werden.

Zusätzlich oder alternativ kann der erste Befestigungsabschnitt 7 kraftschlüssig und/oder stoffschlüssig mit dem zweiten Befestigungsabschnitt 8 verbunden sein, insbesondere können alle Befestigungsabschnitte 7, 8 des Befestigungselements 4 kraftschlüssig und/oder stoffschlüssig miteinander verbunden sein.

Im Ausführungsbeispiel ist die Einheit aus erstem Befestigungsabschnitt 7 und zweitem Befestigungsabschnitt 8 einstückig ausgebildet. Hier und weiter vorzugsweise ist das Befestigungselement 4 insgesamt einstückig ausgebildet. Vorzugsweise sind der erste Befestigungsabschnitt 7 und der zweite Befestigungsabschnitt 8 nicht nur fest, sondern so innig miteinander verbunden, dass bei der Trennung mindestens ein Teil zerstört wird. Besonders bevorzugt besteht mindestens ein Befestigungsabschnitt 7, 8 aus ein und demselben Material. Weiter bevorzugt bestehen alle Befestigungsabschnitte 7, 8 einzeln für sich aus ein und demselben Material.

Hier ist das Befestigungselement 4 derart hergestellt, dass der erste Befestigungsabschnitt 7 von dem zweiten Befestigungsabschnitt 8 im Spritzgießverfahren, insbesondere Kunststoff-Spritzgießverfahren, umspritzt wurde und nach Art einer Umspritzung zu einem Stück verbunden ist. Der durch Umspritzung hergestellte Befestigungsabschnitt 8 kann, insbesondere, wenn es sich nicht um einen Synthesekautschuk handelt, anschließend vulkanisiert werden. Besonders bewährt hat sich die Herstellung der beiden Befestigungsabschnitte 7, 8 im Spritzgießverfahren in einer Form. Bevorzugt entsteht eine auch stoffschlüssige Verbindung der Befestigungsabschnitte durch Vernetzung.

Der erste Befestigungsabschnitt 7 weist hier und vorzugsweise einen Abstützflansch 17 für den zweiten Befestigungsabschnitt 8 auf. Auf diese Weise wird die Übertragung von Druckkräften zwischen den Befestigungsabschnitten 7, 8 verbessert.

In einer weiteren denkbaren Ausführungsform, auf welche vorstehend auch schon kurz eingegangen wurde, kann ein nicht gezeigter dritter Befestigungsabschnitt vorgesehen sein. Dieser dritte Befestigungsabschnitt kann alle für den ersten Befestigungsabschnitt 7 beschriebenen Merkmale einzeln oder in Kombination aufweisen, wobei er zur Befestigung mit der Komponente 1 ausgebildet ist. Die Verbindung zwischen dem möglichen dritten Befestigungsabschnitt und dem zweiten Befestigungsabschnitt 8 kann alle Merkmale einzeln oder in Kombination, welche für die Verbindung des zweiten Befestigungsabschnitts 8 mit dem ersten Befestigungsabschnitt 7 beschrieben sind. Bevorzugt sind der erste Befestigungsabschnitt 7 und der dritte Befestigungsabschnitt gleich ausgebildet, sie können jedoch auch unterschiedlich ausgebildet sein. Weiter bevorzugt sind auch die Verbindung zwischen dem dritten Befestigungsabschnitt und dem zweiten Befestigungsabschnitt 8 gleichartig wie die Verbindung zwischen dem ersten Befestigungsabschnitt 7 und dem zweiten Befestigungsabschnitt 8.

Nachfolgend soll die Befestigung der Komponente 1 am Trägerelement 5 des Kraftfahrzeugs 6 insbesondere Verschlusselement 18 des Kraftfahrzeugs 6 beschrieben werden. Besonders bevorzugt weist das Trägerelement 5 mindestens ein Gegeneingriffselement 10 für den befestigenden Eingriff mit dem Eingriffselement 9 des ersten Befestigungsabschnitts 7 auf. Im Ausführungsbeispiel weist das Trägerelement 5 eine Öffnung 19 auf, in welche das Gegeneingriffselement 10 befestigt wird. Bevorzugt durch eine Nut 20 und/oder Flanschverbindung 21.

Der erste Befestigungsabschnitt 7 kann zusammen mit dem Gegeneingriffselement 10 des Trägerelements 5 eine schwingungsdämpfende, insbesondere Körperschall dämpfende Wirkung aufweisen. Auf diese Weise können Schwingungen, welche vom zweiten Befestigungsabschnitt nicht gedämpft wurden, hier gedämpft werden. Dabei ist das Gegeneingriffselement 10 bevorzugt als elastischer Körper ausgebildet, insbesondere als elastischer Einsatz. Als besonders vorteilhaft für eine gute und platzsparende Montage hat sich herausgestellt, wenn das Gegeneingriffselement 10 weiblich und zur Aufnahme eines männlichen Eingriffselements 9 ausgebildet ist. Bevorzugt greift es in eine Ausstanzung eines Blechs des Kraftfahrzeugs 6 ein.

Hier und vorzugsweise ist die Komponente eine Zuziehhilfe 3 oder ein nicht gezeigter Öffnungshilfsantrieb. Das Trägerelement 5 kann Bestandteil eines Verschlusselements 18 sein. Der Begriff des Verschlusselements 18 ist weit zu verstehen. Dazu gehören beispielsweise Seitentüren, insbesondere Klapp- und Schiebetüren, Heckklappen, Heckdeckel, Motorhauben, Laderaumböden o. dgl..

Nachfolgend wird das Verfahren zur Montage des Kraftfahrzeugschließsystems am Trägerelement beschrieben.

Hier und vorzugsweise wird in einer Vormontage die Komponente des Kraftfahrzeugschließsystems montiert. Bei, vor oder nach dieser Montage wird zunächst das mindestens eine Befestigungselement 4 an der Komponente 1 im Übrigen befestigt. Das Befestigen des Befestigungselements 4 an der Komponente erfolgt bevorzugt durch Zugkraft, insbesondere in dem ein Durchzugstopfen durch eine Öffnung der Komponente durchgesteckt und anschließen in eine Rastposition gezogen wird. Nach diesem Vormontageschritt wird die Komponente 1 bevorzugt der Endmontage zugeführt. Dann wird die Komponente 1 bevorzugt über das mindestens eine Befestigungselement 4 an dem Trägerelement 5 befestigt.

Bevorzugt erfolgt die Endmontage der Komponente 1 durch Aufdrücken von einer Seite. Die Komponente 1 wird durch Druckkräfte an dem Trägerelement 5 befestigt. Eine einseitige Montage ohne Hintergreifen des Trägerelements 5 ist hierdurch möglich. Besonders bevorzugt erfolgt die Befestigung durch eine Schnappverbindung.

Durch die vorgeschlagene Komponente 1, das vorgeschlagene Kraftfahrzeugschließsystem 2 und das vorgeschlagene Verfahren zur Montage eines Kraftfahrzeugschließsystems 2 wird eine einfache Montage und eine gute Dämpfung und damit Geräuschreduzierung der Komponente im Betrieb erreicht.

## Patentansprüche

1. Komponente eines Kraftfahrzeugschließsystems mit mindestens einem Befestigungselement (4) zur Befestigung der Komponente (1) an einem Kraftfahrzeug (6), wobei das Befestigungselement (4) einen ersten Befestigungsabschnitt (7) und einen zweiten Befestigungsabschnitt (8) aufweist, wobei der erste Befestigungsabschnitt (7) ein als Schnappelement (9a) ausgestaltetes Eingriffselement (9) für den befestigenden Eingriff mit einem Gegen-Eingriffselement (10) am Kraftfahrzeug (6) ausbildet und wobei der zweite Befestigungsabschnitt (8) aus einem weicheren Material besteht als der erste Befestigungsabschnitt (7) und wobei der erste Befestigungsabschnitt (7) und der zweite Befestigungsabschnitt (8) eine Einheit ausbilden, die als solche im Wesentlichen formstabil ist, **dadurch gekennzeichnet, dass** die Einheit aus erstem Befestigungsabschnitt (7) und zweitem Befestigungsabschnitt (8) einstückig ausgebildet ist,
und/oder,
wobei das Befestigungselement derart hergestellt ist, dass der erste Befestigungsabschnitt (7) von dem zweiten Befestigungsabschnitt (8) im Spritzgießverfahren umspritzt wurde und nach Art einer Umspritzung zu einem Stück verbunden ist.

2. Komponente nach Anspruch 1, **dadurch gekennzeichnet, dass** das Befestigungselement (4) für die Befestigung der Komponente (1) Zugkräfte und/oder Druckkräfte überträgt, vorzugsweise, dass sich die Befestigungsabschnitte (7, 8) auf einer geometrischen Befestigungselementachse (A) erstrecken, entlang der der Kraftfluss der Druckkräfte und/oder Zugkräfte verläuft, weiter vorzugsweise, dass sich das Befestigungselement (4) entlang der Befestigungselementachse (A) länglich erstreckt.

3. Komponente nach einem der vorhergehenden Ansprüche, **dadurch gekennzeichnet, dass** der erste Befestigungsabschnitt (7) kraftschlüssig und/oder stoffschlüssig mit dem zweiten Befestigungsabschnitt (8) verbunden ist, insbesondere dass alle Befestigungsabschnitte (7, 8) des Befestigungselements (4) kraftschlüssig und/oder stoffschlüssig miteinander verbunden sind.

4. Komponente nach einem der vorhergehenden Ansprüche, **dadurch gekennzeichnet, dass** das Befestigungselement (4), insbesondere der zweite Befestigungsabschnitt (8), eine Eingriffskontur (11) für die Befestigung an der Komponente (1) im Übrigen aufweist, vorzugsweise, dass diese der Komponente (1) zugewandte Eingriffskontur (11), vorzugsweise der zweite Befestigungsabschnitt (8) des Befestigungselements (4), als Stopfen, insbesondere Durchziehstopfen, ausgebildet ist.

5. Komponente nach einem der vorhergehenden Ansprüche, **gekennzeichnet durch** eine Öffnung, vorzugsweise ein rundes oder halbmondförmiges Loch zur Befestigung des Befestigungselements, insbesondere des zweiten Befestigungsabschnitts an der Komponente, insbesondere einem Gehäuseabschnitt der Komponente.

6. Komponente nach einem der vorhergehenden Ansprüche, **dadurch gekennzeichnet, dass** das Befestigungselement (4) eine schwingungsdämpfende, insbesondere körperschalldämpfende Wirkung aufweist, vorzugsweise, dass der erste Befestigungsabschnitt (7), ggf. zusammen mit dem Gegen-Eingriffselement (10) am Kraftfahrzeug (6), und/oder der zweite Befestigungsabschnitt (8) eine schwingungsdämpfende, insbesondere körperschalldämpfende Wirkung aufweist bzw. aufweisen, weiter vorzugsweise, dass der erste Befestigungsabschnitt (7), ggf. zusammen mit dem Gegen-Eingriffselement (10) am Kraftfahrzeug (6), und der zweite Befestigungsabschnitt (8) unterschiedliche Dämpfungsverhalten aufweisen.

7. Komponente nach einem der vorhergehenden Ansprüche, **dadurch gekennzeichnet, dass** das Material des ersten Befestigungsabschnitt (7) eine Shore-D Härte zwischen 40 und 100, insbesondere zwischen 60 und 95 aufweist.

8. Komponente nach einem der vorhergehenden Ansprüche, **dadurch gekennzeichnet, dass** das Material des ersten Befestigungsabschnitts (7) ein Kunststoffmaterial ist, vorzugsweise, dass das Material des ersten Befestigungsabschnitts (7) ein Polyamid, insbesondere PA612, oder ein PBT-Material ist.

9. Komponente nach einem der vorhergehenden Ansprüche, **dadurch gekennzeichnet, dass** das Material des ersten Befestigungselements (7) ein faserverstärkter Kunststoff, insbesondere Glasfaserverstärkter Kunststoff, wobei der Faseranteil bevorzugt mindestens 15 Gew-%, weiter bevorzugt mindestens 20 Gew-%, weiter bevorzugt mindestens 30 Gew-% beträgt.

10. Komponente nach einem der vorhergehenden Ansprüche, **dadurch gekennzeichnet, dass** das Material des zweiten Befestigungsabschnitts (8) ein Elastomer ist, vorzugsweise, dass Material des zweiten Befestigungsabschnitts (8) eine Shore-A Härte zwischen 35 und 80, vorzugsweise zwischen 45 und 70, weiter vorzugsweise zwischen 50 und 60 aufweist, und dass das Material des zweiten Befestigungsabschnitts (8) insbesondere ein EPDM-Material oder ein NBR-Material ist.

11. Komponente nach einem der vorhergehenden Ansprüche, **dadurch gekennzeichnet, dass** der erste Befestigungsabschnitt (7) unmittelbar mit dem zweiten Befestigungsabschnitt (8) an einer Verbindungsstelle (15) verbunden ist und insbesondere der für die Befestigung erforderliche Kraftfluss zwischen dem ersten Befestigungsabschnitt (7) und dem zweiten Befestigungsabschnitt (8) über die Verbindungsstelle (15) läuft, vorzugsweise, dass der erste Befestigungsabschnitt (7) formschlüssig mit dem zweiten Befestigungsabschnitt (8) verbunden ist, weiter vorzugsweise, dass der erste Befestigungsabschnitt (7) mit dem zweiten Befestigungsabschnitt (8) durch eine gegenseitige, insbesondere kegelförmige, Hinterschneidung (16) verbunden ist.

12. Komponente nach einem der vorhergehenden Ansprüche, **dadurch gekennzeichnet, dass** das Befestigungselement (4) insgesamt einstückig ausgebildet ist.

13. Komponente nach einem der vorhergehenden Ansprüche, **dadurch gekennzeichnet, dass** das Befestigungselement derart hergestellt ist, dass der erste Befestigungsabschnitt (7) von dem zweiten Befestigungsabschnitt (8) im Kunststoff-Spritzgießverfahren umspritzt wurde und nach Art einer Umspritzung zu einem Stück verbunden ist.

14. Kraftfahrzeugschließsystem mit einer Komponente (1) nach einem der vorhergehenden Ansprüche und mit einem Trägerelement (5), insbesondere Verschlusselement (18), **dadurch gekennzeichnet, dass** die Komponente (1) über das mindestens eine Befestigungselement (4) an dem Trägerelement (5) befestigt ist.

15. Kraftfahrzeugschließsystem nach Anspruch 14, **dadurch gekennzeichnet, dass** das Trägerelement (5) mindestens ein Gegen-Eingriffselement (10) für den befestigenden Eingriff mit dem Eingriffselement (9) des ersten Befestigungsabschnitts (7) aufweist, vorzugsweise, dass der erste Befestigungsabschnitt (7) zusammen mit dem Gegen-Eingriffselement (10) des Trägerelements (5) eine schwingungsdämpfende, insbesondere körperschalldämpfende Wirkung aufweist.

16. Verfahren zur Montage eines Kraftfahrzeugschließsystems (2) nach einem der vorhergehenden Ansprüche 14 oder 15, **dadurch gekennzeichnet, dass** in einem Endmontageschritt die Komponente (1) über das mindestens eine Befestigungselement (4) an einem Trägerelement (5) befestigt wird.

17. Verfahren nach Anspruch 16, **dadurch gekennzeichnet, dass** in einem dem Endmontageschritt vorgelagerten Vormontageschritt das mindestens eine Befestigungselement (4) an der Komponente (1) im Übrigen befestigt wird.

18. Verfahren nach Anspruch 16 oder 17, **dadurch gekennzeichnet, dass** das Befestigungselement (4) durch Zugkräfte an der Komponente (1) befestigt wird und/oder dass die Komponente (1) durch Druckkräfte an dem Trägerelement (5) befestigt wird, insbesondere durch eine Schnappverbindung.

## Claims

1. Component of a motor vehicle locking system having at least one fastening element (4) for fastening the component (1) to a motor vehicle (6), wherein the fastening element (4) has a first fastening portion (7) and a second fastening portion (8), wherein the first fastening portion (7) forms an engagement element (9), which is configured as a snap element (9a), for fastening engagement with a mating engagement element (10) on the motor vehicle (6), and wherein the second fastening portion (8) consists of a softer material than the first fastening portion (7), and wherein the first fastening portion (7) and the second fastening portion (8) form a unit which as such is substantially dimensionally stable, **characterized in that** the unit consisting of the first fastening portion (7) and second fastening portion (8) is formed in one piece, and/or wherein the fastening element is produced in such a way that the first fastening portion (7) has been overmoulded by the second fastening portion (8) in an injection-moulding process and is connected in the manner of an overmoulding to form one piece.

2. Component according to Claim 1, **characterized in that**, for fastening the component (1), the fastening element (4) transmits tensile forces and/or compressive forces, preferably **in that** the fastening portions (7, 8) extend on a geometric fastening element axis (A) along which the force flow of the compressive forces and/or tensile forces runs, further preferably **in that** the fastening element (4) extends in elongate fashion along the fastening element axis (A).

3. Component according to one of the preceding claims, **characterized in that** the first fastening portion (7) is connected to the second fastening portion (8) in a force-fitting and/or integrally bonded manner, in particular **in that** all the fastening portions (7, 8) of the fastening element (4) are connected to one another in a force-fitting and/or integrally bonded manner.

4. Component according to one of the preceding claims, **characterized in that** the fastening element (4), in particular the second fastening portion (8), otherwise has an engagement contour (11) for fastening to the component (1), preferably **in that** this engagement contour (11), which faces the component (1), preferably the second fastening portion (8) of the fastening element (4), is designed as a plug, in particular a pull through plug.

5. Component according to one of the preceding claims, **characterized by** an opening, preferably a round or half-moon-shaped hole, for fastening the fastening element, in particular the second fastening portion, to the component, in particular to a housing portion of the component.

6. Component according to one of the preceding claims, **characterized in that** the fastening element (4) has a vibration-damping, in particular structure-borne-damping action, preferably **in that** the first fastening portion (7), optionally together with the mating engagement element (10) on the motor vehicle (6), and/or the second fastening portion (8) have or has a vibration-damping, in particular structure-borne-damping action, further preferably **in that** the first fastening portion (7), optionally together with the mating engagement element (10) on the motor vehicle (6), and the second fastening portion (8) have different damping behaviours.

7. Component according to one of the preceding claims, **characterized in that** the material of the first fastening portion (7) has a Shore D hardness of between 40 and 100, in particular of between 60 and 95.

8. Component according to one of the preceding claims, **characterized in that** the material of the first fastening portion (7) is a plastic material, preferably in that the material of the first fastening portion (7) is a polyamide, in particular PA612, or a PBT material.

9. Component according to one of the preceding claims, **characterized in that** the material of the first fastening element (7) is a fibre-reinforced plastic, in particular glass-fibre-reinforced plastic, wherein the fibre fraction is preferably at least 15% by weight, further preferably at least 20% by weight, further preferably at least 30% by weight.

10. Component according to one of the preceding claims, **characterized in that** the material of the second fastening portion (8) is an elastomer, preferably **in that** the material of the second fastening portion (8) has a Shore A hardness of between 35 and 80, preferably of between 45 and 70, further preferably of between 50 and 60, and **in that** the material of the second fastening portion (8) is in particular an EPDM material or an NBR material.

11. Component according to one of the preceding claims, **characterized in that** the first fastening portion (7) is connected directly to the second fastening portion (8) at a connection point (15), and in particular the force flow, which is required for fastening, between the first fastening portion (7) and the second fastening portion (8) runs via the connection point (15), preferably **in that** the first fastening portion (7) is connected to the second fastening portion (8) in a form-fitting manner, further preferably **in that** the first fastening portion (7) is connected to the second fastening portion (8) by means of a mutual, in particular cone-shaped, undercut (16).

12. Component according to one of the preceding claims, **characterized in that** the fastening element (4) is formed in one piece overall.

13. Component according to one of the preceding claims, **characterized in that** the fastening element is produced in such a way that the first fastening portion (7) has been overmoulded by the second fastening portion (8) in a plastic injection-moulding process and is connected in the manner of an overmoulding to form one piece.

14. Motor vehicle locking system having a component (1) according to one of the preceding claims and having a carrier element (5), in particular closure element (18), **characterized in that** the component (1) is fastened to the carrier element (5) via the at least one fastening element (4).

15. Motor vehicle locking system according to Claim 14, **characterized in that** the carrier element (5) has at least one mating engagement element (10) for fastening engagement with the engagement element (9) of the first fastening portion (7), preferably **in that** the first fastening portion (7), together with the mating engagement element (10) of the carrier element (5), has a vibration-damping, in particular structure-borne-damping action.

16. Method for mounting a motor vehicle locking system (2) according to either of the preceding Claims 14 and 15, **characterized in that**, in a final-mounting step, the component (1) is fastened to a carrier element (5) via the at least one fastening element (4).

17. Method according to Claim 16, **characterized in that**, in a pre-mounting step preceding the final-mounting step, the at least one fastening element (4) is otherwise fastened to the component (1).

18. Method according to Claim 16 or 17, **characterized in that** the fastening element (4) is fastened to the component (1) by means of tensile forces, and/or **in that** the component (1) is fastened to the carrier element (5) by means of compressive forces, in particular by means of a snap connection.

## Revendications

1. Composant d'un système de fermeture de véhicule automobile comprenant au moins un élément de fixation (4) pour la fixation du composant (1) à un véhicule automobile (6), l'élément de fixation (4) présentant une première portion de fixation (7) et une deuxième portion de fixation (8), la première portion de fixation (7) constituant un élément d'engagement (9) réalisé sous forme d'élément d'encliquetage (9a) pour l'engagement par fixation avec un élément d'engagement conjugué (10) sur le véhicule automobile (6) et la deuxième portion de fixation (8) étant constituée d'un matériau plus souple que la première portion de fixation (7) et la première portion de fixation (7) et la deuxième portion de fixation (8) formant une unité qui présente une forme essentiellement stable en tant que telle,
**caractérisé en ce que**
l'unité constituée de la première portion de fixation (7) et de la deuxième portion de fixation (8) est réalisée d'une seule pièce et/ou l'élément de fixation étant fabriqué de telle sorte que la première portion de fixation (7) soit surmoulée avec la deuxième portion de fixation (8) dans un procédé de moulage par injection et soit assemblée à la manière d'un surmoulage pour obtenir une pièce.

2. Composant selon la revendication 1, **caractérisé en ce que** l'élément de fixation (4), pour la fixation du composant (1), transmet des forces de traction et/ou des forces de pression, de préférence **en ce que** les portions de fixation (7, 8) s'étendent sur un axe géométrique d'élément de fixation (A) le long duquel s'écoule le flux de forces des forces de pression et/ou des forces de traction, de préférence en outre **en ce que** l'élément de fixation (4) s'étend longitudinalement le long de l'axe d'élément de fixation (A).

3. Composant selon l'une quelconque des revendications précédentes, **caractérisé en ce que** la première portion de fixation (7) est assemblée par engagement par force et/ou par liaison de matière à la deuxième portion de fixation (8), en particulier **en ce que** toutes les portions de fixation (7, 8) de l'élément de fixation (4) sont assemblées les unes aux autres par engagement par force et/ou par liaison de matière.

4. Composant selon l'une quelconque des revendications précédentes, **caractérisé en ce que** l'élément de fixation (4), en particulier la deuxième portion de fixation (8), présente du reste un contour d'engagement (11) pour la fixation au composant (1), de préférence **en ce que** ce contour d'engagement (11) tourné vers le composant (1), de préférence la deuxième portion de fixation (8) de l'élément de fixation (4), est réalisé sous forme de bouchon, en particulier sous forme de bouchon extensible.

5. Composant selon l'une quelconque des revendications précédentes, **caractérisé par** une ouverture, de préférence un trou rond ou en forme de demi-lune pour la fixation de l'élément de fixation, en particulier de la deuxième portion de fixation, au composant, en particulier à une portion de boîtier du composant.

6. Composant selon l'une quelconque des revendications précédentes, **caractérisé en ce que** l'élément de fixation (4) présente un effet d'amortissement des vibrations, en particulier d'amortissement du bruit de structure, de préférence **en ce que** la première portion de fixation (7), éventuellement conjointement avec l'élément d'engagement conjugué (10) sur le véhicule automobile (6), et/ou la deuxième portion de fixation (8) présente ou présentent un effet d'amortissement des vibrations, en particulier d'amortissement des bruits de structure, de préférence en outre **en ce que** la première portion de fixation (7), éventuellement conjointement avec l'élément d'engagement conjugué (10) sur le véhicule automobile (6), et la deuxième portion de fixation (8), présentent des comportements d'amortissement différents.

7. Composant selon l'une quelconque des revendications précédentes, **caractérisé en ce que** le matériau de la première portion de fixation (7) présente une dureté Shore D comprise entre 40 et 100, en particulier entre 60 et 95.

8. Composant selon l'une quelconque des revendications précédentes, **caractérisé en ce que** le matériau de la première portion de fixation (7) est un matériau en plastique, de préférence **en ce que** le matériau de la première portion de fixation (7) est un polyamide, en particulier du PA612, ou un matériau PBT.

9. Composant selon l'une quelconque des revendications précédentes, **caractérisé en ce que** le matériau du premier élément de fixation (7) est un plastique renforcé par des fibres, en particulier un plastique renforcé par des fibres de verre, la proportion de fibres étant de préférence d'au moins 15 % en poids, plus préférablement d'au moins 20 % en poids, plus préférablement d'au moins 30 % en poids.

10. Composant selon l'une quelconque des revendications précédentes, **caractérisé en ce que** le matériau de la deuxième portion de fixation (8) est un élastomère, de préférence **en ce que** le matériau de la deuxième portion de fixation (8) présente une dureté Shore A comprise entre 35 et 80, de préférence entre 45 et 70, plus préférablement entre 50 et 60, et **en ce que** le matériau de la deuxième portion de fixation (8) est notamment un matériau EPDM ou NBR.

11. Composant selon l'une quelconque des revendications précédentes, **caractérisé en ce que** la première portion de fixation (7) est connectée directement à la deuxième portion de fixation (8) au niveau d'un point de liaison (15) et notamment le flux de forces nécessaire pour la fixation s'étend entre la première portion de fixation (7) et la deuxième portion de fixation (8) via le point de liaison (15), de préférence **en ce que** la première portion de fixation (7) est connectée par engagement par correspondance de formes à la deuxième portion de fixation (8), plus préférablement **en ce que** la première portion de fixation (7) est connectée à la deuxième portion de fixation (8) par une contre-dépouille (16) mutuelle, notamment de forme conique.

12. Composant selon l'une quelconque des revendications précédentes, **caractérisé en ce que** l'élément de fixation (4) est réalisé dans l'ensemble d'une seule pièce.

13. Composant selon l'une quelconque des revendications précédentes, **caractérisé en ce que** l'élément de fixation est fabriqué de telle sorte que la première portion de fixation (7) soit surmoulée avec la deuxième portion de fixation (8) dans un procédé de moulage par injection de plastique et soit assemblée à la manière d'un surmoulage pour obtenir une pièce.

14. Système de fermeture de véhicule automobile comprenant un composant (1) selon l'une quelconque des revendications précédentes et un élément de support (5), en particulier un élément de fermeture (18), **caractérisé en ce que** le composant (1) est fixé à l'élément de support (5) par le biais de l'au moins un élément de fixation (4).

15. Système de fermeture de véhicule automobile selon la revendication 14, **caractérisé en ce que** l'élément de support (5) présente au moins un élément d'engagement conjugué (10) pour l'engagement par fixation avec l'élément d'engagement (9) de la première portion de fixation (7), de préférence **en ce que** la première portion de fixation (7) présente, conjointement avec l'élément d'engagement conjugué (10) de l'élément de support (5), un effet d'amortissement des vibrations, en particulier d'amortissement des bruits de structure.

16. Procédé de montage d'un système de fermeture de véhicule automobile (2) selon l'une quelconque des revendications précédentes 14 ou 15, **caractérisé en ce que** dans une étape de montage finale, le composant (1) est fixé à un élément de support (5) par le biais de l'au moins un élément de fixation (4) .

17. Procédé selon la revendication 16, **caractérisé en ce que** dans une étape de prémontage préalable à l'étape de montage finale, l'au moins un élément de fixation (4) est par ailleurs fixé au composant (1) .

18. Procédé selon la revendication 16 ou 17, **caractérisé en ce que** l'élément de fixation (4) est fixé par des forces de traction au composant (1) et/ou **en ce que** le composant (1) est fixé par des forces de pression à l'élément de support (5), en particulier par une connexion par encliquetage.
